**Europäisches Patentamt**

**European Patent Office**

**Office européen des brevets**

(19)

(11) Veröffentlichungsnummer : **0 160 124**
**B1**

(12)

# EUROPÄISCHE PATENTSCHRIFT

(45) Veröffentlichungstag der Patentschrift :
**17.05.89**

(51) Int. Cl.⁴ : **B 29 B   7/48**

(21) Anmeldenummer : **84113583.3**

(22) Anmeldetag : **10.11.84**

(54) **Gleichdrall-Doppelschneckenkneter mit Knetscheiben.**

(30) Priorität : **02.04.84 DE 3412258**

(43) Veröffentlichungstag der Anmeldung :
**06.11.85 Patentblatt 85/45**

(45) Bekanntmachung des Hinweises auf die Patenterteilung : **17.05.89 Patentblatt 89/20**

(84) Benannte Vertragsstaaten :
**CH DE FR GB IT LI**

(56) Entgegenhaltungen :
**DE—A— 2 145 095**
**DE—A— 2 328 689**
**US—A— 3 387 826**
**US—A— 4 131 371**

(73) Patentinhaber : **Werner & Pfleiderer GmbH**
**Theodorstrasse 10 Postfach 30 12 20**
**D-7000 Stuttgart 30 (DE)**

(72) Erfinder : **Häring, Erwin, Dipl.-Ing.**
**Brucknerstrasse 22**
**D-7000 Stuttgart 1 (DE)**
Erfinder : **Weihrich, Gerhard, Dipl.-Ing.**
**Einsiedlerweg 7**
**D-7132 Illingen (DE)**
Erfinder : **Wörz, Wolfgang, Ing. (grad.)**
**Wilhelmstrasse 20**
**D-7132 Illingen (DE)**

(74) Vertreter : **Rau, Manfred, Dr. Dipl.-Ing. et al**
**Rau & Schneck, Patentanwälte Königstrasse 2**
**D-8500 Nürnberg 1 (DE)**

Jouve, 18, rue St-Denis, 75001 Paris, France

EP 0 160 124 B1

**Beschreibung**

Die Erfindung betrifft einen Gleichdrall-Doppelschneckenkneter nach dem Oberbegriff des Anspruches 1.

Bei derartigen Doppelschneckenknetern ist es bekannt, zweigängige Knetscheiben vorzusehen, deren Kämme annähernd spielfrei an der Gehäusewand vorbeilaufen. Der Nachteil dieser bekannten Doppelschneckenkneter liegt darin, daß sie bei bestimmten Anwendungsfällen eine noch nicht optimale Aufschmelzleistung aufweisen. Die Knetbereiche, die aus positiv versetzten Knetscheiben, also aus förderwirksam angeordneten Knetscheiben aufgebaut sind, schmelzen die gängigen Thermoplaste, wie Polyolefine, Styrolpolymere, Polyester, Polyäthylen nicht vollständig auf. Um dies zu erreichen, müssen Stauelemente, wie Drosseln oder rückfördernde Schnecken- oder Knetelemente eingesetzt werden. Dies führt zu einer negativen Beeinflussung des Einzugsverhalten, da der durch Stauelemente bewirkte Rückdruck den Materialeinzug behindert. Dies gilt insbesondere dann, wenn pulverförmiges Material mit niedrigem Schüttgewicht eingesetzt wird, so daß eine Verschlechterung des Füllungsgrades erreicht wird. Außerdem führt dies zu ungünstigen mechanischen Auswirkungen, nämlich örtlich hohem Verschleiß, da die Aufschmelzung ganz überwiegend unmittelbar vor dem Stauelement stattfindet, wodurch auch örtlich hohe Drehmomente im Aufschmelzbereich erreicht werden.

Es ist auch schon bekanntgeworden, derartige zweigängige Knetscheiben an ihren Kämmen und deren Flanken so zu korrigieren, daß sich ein Spiel zwischen den Knetscheiben und der Gehäusewand bildet. Die vorstehend geschilderten Nachteile werden dabei zwar gemildert, sie bleiben grundsätzlich aber vorhanden. Als zusätzlicher Nachteil kommt noch die fehlende Selbstreinigung hinzu.

Aus der EP-OS 0 037 984 ist es bekannt, bei einem Gleichdrall-Doppelschneckenkneter Knetscheiben vorzusehen, die als Exzenterscheiben mit Kreisquerschnitt ausgebildet sind. Hierbei ist vorgesehen, zum einen im Durchdringungsbereich der Bohrungen ein Spiel zwischen zwei benachbarten Knetscheiben vorzusehen und außerdem gegenüber der Gehäusewand ein Spiel vorzusehen, das größer ist als das erstgenannte Spiel. Da diese Exzenterscheiben Kreisquerschnitt haben, müssen sie ohnehin Abstand zur Gehäusewand aufweisen, um überhaupt funktionsfähig zu sein.

Aus der EP-PS 0 002 131 sind Doppelschneckenkneter mit zweigängigen Schnecken bekannt, von denen jeweils eine Schneckenwindung angenähert spielfrei gegenüber der Gehäusewand läuft, während die jeweils andere Schneckenwindung deutliches Spiel gegenüber der Gehäusewand aufweist. Die beiden Schnecken sind einander so zugeordnet, daß ein Selbstreinigungseffekt eintritt. Jede der Schnecken kann 2 bis 4 Gänge aufweisen.

Aus der US-PS 4 131 371 ist ebenfalls ein Doppelschneckenkneter mit Gleichdrall-Schneckenwellen bekannt, bei dem die Schneckenwindungen derart ausgebildet sind, daß die Profilmittelpunkte auf einer Schraubenlinie angeordnet sind, die sich um die Schneckenachse windet. Eine solche Ausgestaltung ist konstruktiv außerordentlich aufwendig.

Die Erfindung geht aus von der Erkenntnis, daß zur Erzielung eines möglichst optimalen Arbeitsergebnisses möglichst große Dg/a-Verhältnisse wünschenswert sind, wobei der Realisierung derartiger Verhältnisse aber insofern konstruktive Schranken gesetzt sind, als sich bei herkömmlichen Doppelschneckenknetern dann Beschränkungen hinsichtlich der Gangzahl der Knetscheiben ergeben, welche wiederum im Hinblick auf die Erzielung einer möglichst homogenen und schonenden Aufbereitung nicht wünschenswert sind. Hierbei ist Dg der Durchmesser der jeweiligen Bohrung im Gehäuse und a der Achsabstand der beiden Bohrungen.

Der Erfindung liegt deshalb die Aufgabe zugrunde, unter Berücksichtung vorstehender Erkenntnis durch konstruktiv einfache Maßnahmen eine maximale Durchsatzrate bei möglichst optimaler Schmelz-Homogenität zu erzielen.

Diese Aufgabe wird erfindungsgemäß durch die Merkmale des Kennzeichnungsteiles des Anspruches 1 für n-gängige Knetscheiben und speziell für 3-gängige Knetscheiben durch den Anspruch 2 gelöst. Das erfindungsgemäß vorgesehene Kammspiel ermöglicht es, der genannten Relation zu genügen unter Verwendung einer gegenüber herkömmlichen Konstruktionen jeweils höheren Gangzahl. Hierdurch wird bei sehr gutem Durchsatz eine Einzugsverbesserung erreicht, da sich bei rechtsgestellten, d. h. vorwärtsfördernden Knetscheiben kein Gegendruck aufbaut. Dabei kann (muß aber nicht) auf das Vorsehen von Rückförderelementen verzichtet werden. Trotzdem wird ein definiertes Aufschmelzen und eine starke, gleichmäßige Scherung erreicht. Insbesondere ist auch bei Teilfüllung eine Aufschmelzung möglich, da sich die in dem Doppelschneckenkneter enthaltene Luft nicht nachteilig auswirkt, indem sie problemlos mit durchgezogen werden kann, was dann nicht der Fall ist, wenn wie bei herkömmlichen Konstruktionen notwendigerweise Rückstauelemente für bestimmte Anwendungsbereiche vorgesehen werden müssen.

Es wird also erfindungsgemäß die bekannte Knetscheibengeometrie erhalten, d. h. das optimale Verhältnis von größtem Radius der Knetscheiben zu dem Achsabstand der beiden Wellen bleibt unverändert, so daß eine Abdichtung und damit eine Selbstreinigung zweier in einer Ebene benachbarter Knetscheiben gewährleistet ist.

Besonders vorteilhafte Bereiche für dieses Kammspiel gibt Anspruch 3 wieder. Durch die erfindungsgemäßen Maßnahmen wird erreicht, daß die Zahl der Gänge und damit die Zahl der Knetzonen vergrößert

EP 0 160 124 B1

wird, was eine stärkere Knetung und bessere Durchmischung bewirkt. Gleichzeitig wird der Keilwinkel zwischen der Gehäusewand und der zugeordneten Flanke des jeweiligen Kammes verkleinert, wodurch wiederum ebenfalls eine intensivere Knetung erreicht wird. Andererseits überströmt das zu behandelnde Material die jeweiligen Kämme, so daß jedes einzelne Produktteilchen öfter und gleichmäßiger geschert wird. Druckspitzen werden dabei vermieden. Da zum einen ein Rückstau nicht notwendig ist und zum anderen keine hohen lokalen Druckspitzen aufgebaut werden, kann mit einem größeren Füllungsgrad gearbeitet werden. Dies führt wiederum zu einer intensiveren Durchmischung und Durchknetung.

Weitere Vorteile und Merkmale der Erfindung ergeben sich aus der nachfolgenden Beschreibung von Ausführungsbeispielen anhand der Zeichnung. Es zeigt

Fig. 1 einen Gleichdrall-Doppelschneckenkneter in schematischer Darstellung in Seitenansicht,

Fig. 2 einen vertikalen Teilschnitt durch Fig. 1,

Fig. 3 eine Stirnansicht mehrerer einstückig in einem Knetblock vereinigten Knetscheiben gemäß dem Sichtpfeil III in Fig. 4,

Fig. 4 eine Seitenansicht des Knetblockes entsprechend dem Sichtpfeil IV in Fig. 3,

Fig. 5 einen senkrechten Schnitt durch die Maschine nach Fig. 1 mit dreigängigen Knetscheiben,

Fig. 6 eine Darstellung entsprechend Fig. 5 mit an den Kämmen abgerundeten Knetscheiben,

Fig. 7 eine Darstellung entsprechend den Fig. 5 und 6 mit einer Darstellung der Materialbehandlung durch die Knetscheiben in rein schematischer Darstellung,

Fig. 8 eine Ausgestaltung nach Fig. 7 mit exzentrisch versetzten Knetscheiben, ebenfalls in schematischer Darstellung,

Fig. 9 eine Abwicklung mehrerer zu einem Knetblock vereinigter Knetscheiben (gemäß Fig. 8) mit einer Darstellung der Materialbewegung,

Fig.10 einen Querschnitt durch Fig. 1 mit viergängigen Knetscheiben und

Fig.11 eine Darstellung entsprechend Fig. 10 mit exzentrisch versetzten Knetscheiben.

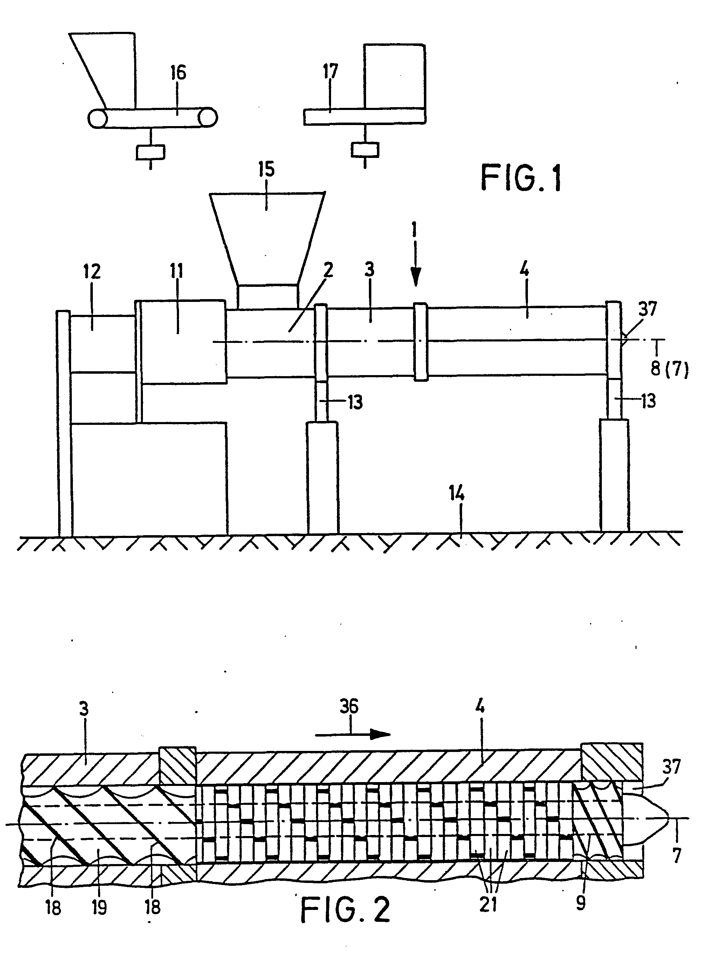

Der in Fig. 1 dargestellte Gleichdrall-Doppelschneckenkneter weist ein Gehäuse 1 auf, das aus mehreren Abschnitten, sogenannten Schüssen 2, 3, 4 besteht, die axial hintereinander angeordnet und aneinandergeflanscht sind. In dem Gehäuse sind zwei achsparallele Bohrungen 5, 6 ausgebildet, die einander nach Art einer liegenden 8 durchdringen. In dem Gehäuse 1 sind konzentrisch zu den Achsen 7, 8 der Bohrungen 5, 6 zwei Wellen 9, 10 gelagert, die über ein Getriebe 11 von einem Motor 12 angetrieben werden. Das Gehäuse 1 und das Getriebe 11 und der Motor 12 sind über Ständer 13 gegenüber dem Boden 14 abgestützt. In den ersten als Einzugszone dienenden Gehäuse-Schuß 2 mündet ein Einlaßtrichter 15 ein, in den zu verarbeitendes Material beispielsweise über eine als Bandwaage ausgebildete Dosiereinrichtung 16, beispielsweise für Granulat und/oder eine als Dosierschnecke ausgebildete Dosiereinrichtung 17, beispielsweise für Pulver, zugeführt wird. In der Einzugszone im Schuß 2 und in der im nächsten Gehäuse-Schuß ausgebildeten Förderzone sind die Wellen 9, 10 jeweils mit einem mit Schneckenstegen 18 versehenen Schneckenkörper 19 versehen. Im dritten Gehäuse-Schuß 4 ist eine Knetzone ausgebildet, in der auf den Wellen 9, 10 jeweils zu Knetblöcken 20 zusammengefaßte Knetscheiben 21 drehfest angeordnet sind. Der Antrieb der Wellen 9, 10 erfolgt gleichsinnig entsprechend den Drehrichtungspfeilen 22. Dieser Grundaufbau von Gleichdrall-Doppelschneckenknetern ist allgemein bekannt und in der Praxis verbreitet, wobei grundsätzlich natürlich auch noch weitere Gehäuse-Schüsse mit gegebenenfalls weiteren Kneteinrichtungen vorgesehen sein können.

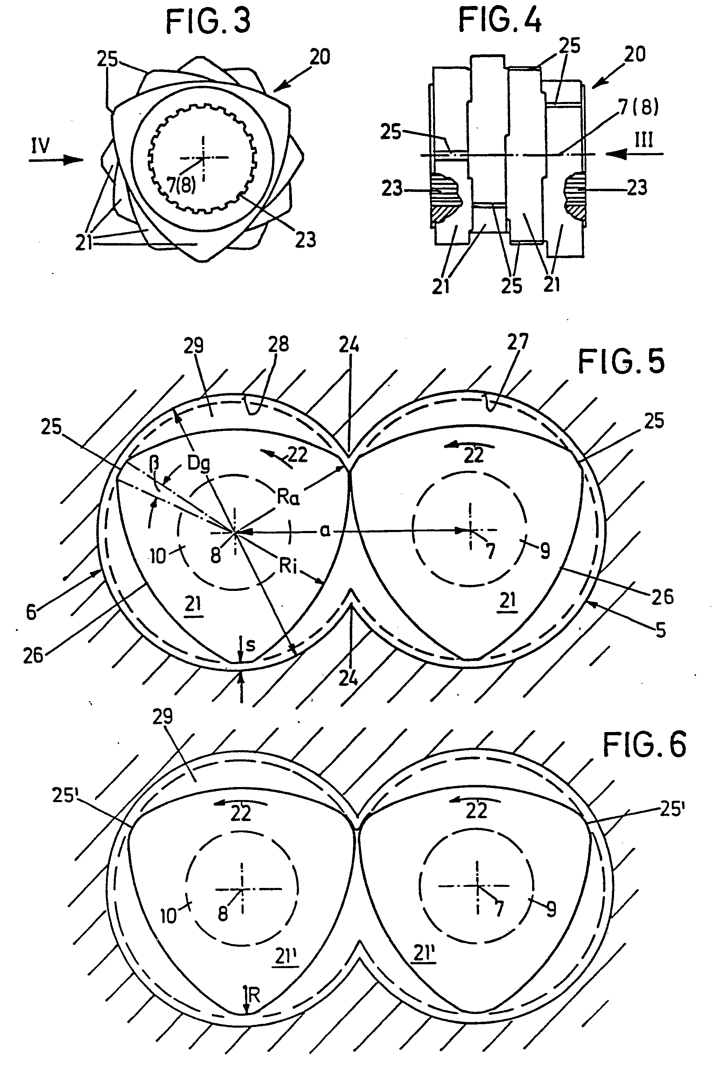

Wie sich aus den Fig. 3 und 4 ergibt, besteht ein Knetblock 20 aus vier einstückig ausgebildeten Knetscheiben 21, die — beispielsweise — um 30° tangential gegeneinander versetzt sind. Jeder Knetblock weist eine Innenverzahnung 23 auf, mittels derer er drehfest auf der entsprechend ausgebildeten Welle 9 bzw. 10 angebracht werden kann.

Die beiden Bohrungen 5, 6 im Gehäuse 1 haben jeweils einen Durchmesser Dg. Der Abstand a der Achsen 7, 8 der Bohrungen 5, 6 ist kleiner als der Durchmesser Dg, da die beiden Bohrungen 5, 6 einander durchdringen, und zwar unter Bildung von Zwickeln 24.

Die in den Fig. 3, 5, 6 dargestellten Knetscheiben sind dreigängig ausgebildet, d. h. sie weisen drei in gleichen Winkelabständen zueinander angeordnete Kämme 25 auf, die bei der Ausgestaltung nach Fig. 5 durch einen Kreisbogenabschnitt mit einem Öffnungswinkel von $\beta = 5$ bis 10° begrenzt werden. Die Kämme werden durch derartig geformte Kurvenabschnitte miteinander verbunden, da beim gleichsinnigen Umlauf zweier einander zugeordneter Knetscheiben 21 in Drehrichtung 22 der jeweilige Kamm 25 sich im Durchdringungsbereich der Bohrungen 5, 6, also zwischen den Zwickeln 24 an dem Kurvenabschnitt 26 der jeweils anderen Knetscheibe 21 praktisch spielfrei vorbeibewegen kann, so daß die in einer Ebene angeordneten Knetscheiben 21 sich gegenseitig reinigen. Wenn der Radius der Knetscheiben 21 im Bereich des jeweiligen Kamms 25 Ra ist, wobei es sich um den größten Radius der Knetscheibe 21 handelt, und wenn der kleinste Radius der Knetscheibe 21 Ri ist, wobei es sich um den Abstand des Kurvenabschnitts 26 in der Mitte zwischen zwei Kämmen 25 handelt, dann gilt aufgrund der vorstehenden Aussagen Ra + Ri = a.

Die von den Kämmen 25 im Bereich der durch die Bohrungen 5, 6 begrenzten Gehäusewände 27, 28 überstrichenen Flächen sind in den Fig. 5 und 6 gestrichelt dargestellt. Dies zeigt anschaulich, daß zwischen den Kämmen 25 und der jeweiligen Gehäusewand 27, 28 ein deutliches Kammspiel s ist, das z. B. im Bereich von $0,06\ Ra \leqslant s \leqslant 0,09\ Ra$ liegen kann.

Die Ausführungsform nach Fig. 6 unterscheidet sich von der nach Fig. 5 nur dadurch, daß die

3

dreigängigen Knetscheiben 21' Kämme 25' aufweisen, die abgerundet sind, also einen Abrundungsradius R aufweisen. Dies führt zusätzlich noch zu dem Vorteil, daß die Keilströmung über die Kämme 25' verstärkt wird.

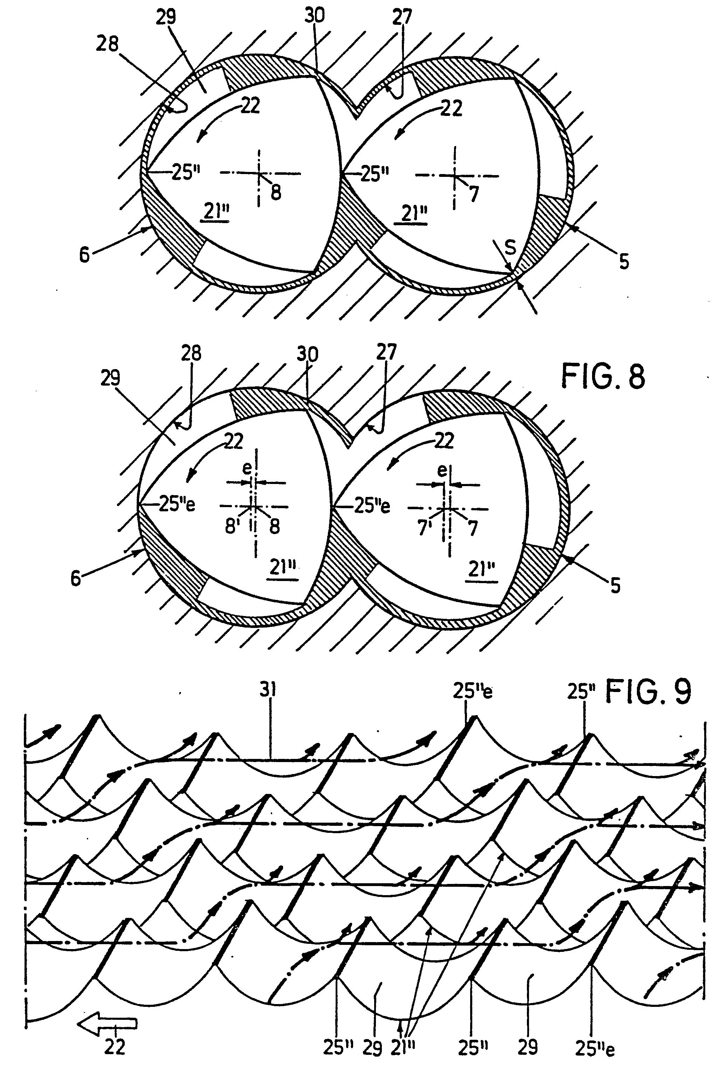

Aus den schematischen Darstellungen gemäß Fig. 7 und 8 ergibt sich der Wirkungsmechanismus des erfindungsgemäßen Kammspiels s. Bei den Knetscheiben 21″ der Fig. 7 und 8 sind aus Gründen der zeichnerischen Vereinfachung die Kämme 25″ spitz, also mit einem Kamm- bzw. Öffnungswinkel o dargestellt. Sie drehen sich gemäß den Drehrichrungspfeilen 22 (im Gegenuhrzeigersinn) und bewegen sich selbstreinigend, also unter Anlage im Durchdringungsbereich der Bohrungen 5, 6 aneinander vorbei. In den Gängen 29, die jeweils zwischen zwei benachbarten Kämmen 25″ ausgebildet sind, befindet sich zu bearbeitendes Material, das sich vor dem in Drehrichtung 22 nacheilenden Kamm staut. Das Material ist in den Fig. 7 und 8 fein schraffiert dargestellt. Aufgrund der Reibung an der stehenden Gehäusewand 27 bzw. 28 wird das Material im jeweiligen Gang 29 umgewälzt und gleichzeitig durch den durch das Kammspiel s gebildeten hat, staut sich das Material auf und wird in Achsrichtung in den zugeordneten Gang 29 der nächsten Knetscheibe 21″ geleitet, wobei — wie sich aus Fig. 9 ergibt — die Anordnung so ist, daß das Material nach dem Übertritt in den Bereich der axial benachbarten Knetscheibe 21″ erst wieder über zwei Kämme 25″ mit ausreichendem Spiel gegenüber der Gehäusewand geschert wird, bevor es vor einen spielfreien Kamm 25″e kommt.

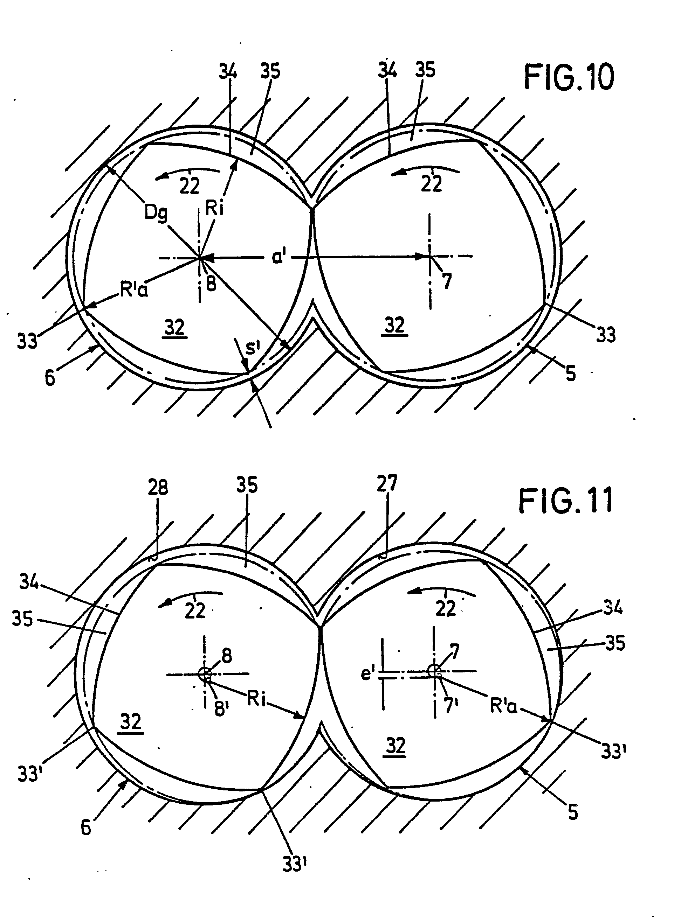

In den Fig. 10 und 11 sind viergängige Ausgestaltungen von Knetscheiben 32 dargestellt. Diese weisen jeweils vier in gleichen Winkelabständen zueinander angeordnete Kämme 33 auf und drehen ebenfalls gleichsinnig entsprechend dem Drehrichtungspfeil 22. Für den Durchmesser Dg der Bohrungen 5, 6 gilt auch hier die Beziehung Dg = 2s' + 2R'a, wobei s' das Kammspiel und R'a der Radius der Kämme 33 ist. Weiterhin gilt für den Abstand a' der Achsen 7, 8 der Bohrungen 5, 6 a' = R'a + Ri, wobei Ri dem kleinsten Radius der Knetscheibe 32 entspricht, d. h. dem Abstand zwischen der Achse 7 bzw. 8 und der Mitte zwischen zwei Kämmen 33 auf dem sie verbindenden Kurvenabschnitt 34. Auch hier werden Gänge 35 zwischen jeweils zwei benachbarten Kämmen 33 gebildet. Bei der in Fig. 10 dargestellten Ausführung reinigen sich die in einer Ebene benachbarten Knetscheiben gegenseitig. Die Ausgestaltung in Fig. 11 entspricht der in Fig. 10, wobei jeweils wie bei der Ausgestaltung nach Fig. 8 die Achsen 7' und 8' der Knetscheiben 32 um eine Exzentrizität e' gegenüber den Achsen 7, 8 versetzt sind, so daß wiederum jeweils ein Kamm 33' an der Gehäusewand 27 bzw. 28 spielfrei entlangbewegt wird, so daß ein vollständig selbstreinigendes System gebildet wird. Wenn alle sonstigen Maße Spalt 30 geschert und bleibt somit in einer dünnen Schicht an der Gehäusewand 27 bzw. 28. Trotzdem bleibt es mit dem jeweils wieder nachfolgenden Material im intensiven Austausch, so daß zwar die theoretische Verweilzeit des Materials etwas vergrößert wird ; gleichzeitig erfolgt aber die Behandlung des Materials intensiver und gleichzeitig erheblich schonender und weniger energieaufwendig.

Die Ausgestaltung nach Fig. 8 unterscheidet sich von der nach Fig. 7 nur dadurch, daß die beiden Knetscheiben 21″ mit einer geringen Exzentrizität e versetzt sind, so daß die Achsen 7' und 8' um ein Maß e gegenüber den Achsen 7, 8 der Bohrungen 5, 6 versetzt sind, das kleiner oder gleich dem Kammspiel s ist. Durch eine solche Exzentrizität e wird erreicht, daß ein Kamm 25″e an der Gehäusewand 27 bzw. 28 vorbeiläuft und auch diese reinigt, wie aus der Darstellung in Fig. 8 im jeweils links oberen Bereich der Bohrungen 5, 6 ersichtlich ist. In einem solchen Fall liegt also ein in vollem Umfang selbstreinigendes System vor.

In Fig. 9 sind mehrere axial hintereinander angeordnete Knetscheiben 21″ in einer exzentrischen Anordnung entsprechend Fig. 8 dargestellt, wobei die axial hintereinander angeordneten Knetscheiben 21″ tangential gegeneinander versetzt sind, wie dies in Fig. 3 dargestellt ist. Das zu behandelnde Material bewegt sich entsprechend dem Materialbewegungspfeil 31 jeweils über die Kämme 25″, d. h. es wird durch den dort ausgebildeten Spalt 30 (vgl. Fig. 8) geschert. Vor dem Kamm 25″e, der praktisch kein Spiel gegenüber der Gehäusewand unverändert bleiben, wird naturgemäß das Kammspiel der übrigen Kämme 33' gegenüber dem Spiel s' vergrößert, was auch für die Ausgestaltung nach Fig. 8 im Vergleich zu der nach Fig. 7 gilt. Auch hier können die Kämme 33 wie in Fig. 5 oder Fig. 6 ausgebildet sein.

In allen Fällen können die Kämme 25, 25', 25″ oder 33 eine positive oder negative Steigung aufweisen, d. h. einen axialen Förderimpuls in der normalen Förderrichtung 36 oder einen Rückförderimpuls auf das Material ausüben.

Wie aus Fig. 2 ersichtlich ist, können eine relativ große Zahl von Knetscheiben, von denen in der Regel jeweils vier zu einem Knetblock zusammengefaßt sind, axial unmittelbar hintereinander angeordnet sein. In Fig. 2 ist eine im Gehäuse-Schuß 4 gebildete Aufschmelzzone mit sich anschließendem offenen Austrag 37 gezeigt. Der offene Austrag 37 dient hier der freien Entnahme der Schmelze zu deren Beurteilung.

Die Breite der Knetscheiben, d. h. ihre axiale Erstreckung liegt im Bereich von 0,3 bis 4 x (Ra-Ri), wobei Ra-Ri die Gangtiefe ist.

Für alle Ausführungsbeispiele gilt, daß die Gehäusewand 27, 28 der entsprechenden Bohrung 5, 6 relativ zu den n-gängigen Knetscheiben 21, 21', 21″, 32 zur Erzeugung eines deutlichen Kammspiels s, s' zwischen der Gehäusewand 27, 28 und den Knetscheiben 21, 21', 21″, 32 derartig dimensioniert ist, daß gilt

$$\frac{Dg}{a} \geq \frac{1}{\cos\frac{\pi}{2\,n}},$$

wobei

Dg = Durchmesser der jeweiligen Bohrungen (5, 6)
a = Achsabstand der Bohrungen (5, 6)
n = Zahl der Gänge jeder Knetscheibe (21, 21', 21", 32).

Für die Ausführungsbeispiele nach den Fig. 5, 6, 7 gilt hierbei n = 3 ; für die Ausführungsbeispiele nach Fig. 10 und 11 gilt hierbei n = 4.

**Patentansprüche**

1. Gleichdrall-Doppelschneckenkneter mit einem Gehäuse (1) mit zwei achsparallel einander unter Bildung von Zwickeln (24) durchdringenden, durch die Gehäusewand (27, 28) begrenzten Bohrungen (5, 6), mit zwei achsparallel in den Bohrungen (5, 6) angeordneten, gleichsinnig antreibbaren Wellen (9, 10), mit auf einem Teil der Länge der Wellen (9, 10) drehfest angeordneten, mit zur Gehäusewand weitgehend spielfreien Schneckenstegen (18) versehenen Schneckenkörpern (19) und mit auf einem Teil der Länge der Wellen (9, 10) drehfest angeordneten, mehrgängigen, mit der Gehäusewand (27, 28) zugeordneten Kämmen (25, 25', 25", 33) versehenen Knetscheiben (21, 21', 21", 32), die jeweils in einer zu den Achsen (7, 8, 7', 8') senkrechten Ebene paarweise einander zugeordnet sind und im Durchdringungsbereich der Bohrungen (5, 6) nahezu spielfrei aneinander vorbeigeführt werden, dadurch gekennzeichnet, daß die Gehäusewand (27, 28) relativ zu den n-gängigen Knetscheiben (21, 21', 21", 32) unter Erzeugung eines deutlichen Kammspiels (s, s') zwischen der Gehäusewand (27, 28) und den Knetscheiben (21, 21', 21", 32) derart dimensioniert ist, daß gilt

$$\frac{Dg}{a} \geq \frac{1}{\cos\frac{\pi}{2\,n}},$$

wobei
Dg = Durchmesser der jeweiligen Bohrungen (5, 6)
a = Achsabstand der Bohrungen (5, 6)
n = Zahl der Gänge jeder Knetscheibe (21, 21', 21", 32).
2. Doppelschneckenkneter nach Patentanspruch 1 mit 3-gängigen Knetscheiben, dadurch gekennzeichnet, daß gilt

$$\frac{Dg}{a} \geq 1,155$$

3. Doppelschneckenkneter nach Patentanspruch 1 oder 2, dadurch gekennzeichnet, daß das Kammspiel (s, s') etwa das 0,06- bis 0,09-Fache des großen Radius (Ra) der Knetscheibe (21, 21', 21", 32) beträgt.
4. Doppelschneckenkneter nach einem der Patentansprüche 1 bis 3, dadurch gekennzeichnet, daß die Achsen (7', 8') der Knetscheiben (21") mit einer Exzentrizität (e) gegenüber den Achsen (7, 8) der Bohrungen (5, 6) angeordnet sind, die kleiner ist als das Kammspiel (s, s') bei fluchtender Achsanordnung.

**Claims**

1. A co-rotating twin-screw kneader comprising a casing (1) having two axially parallel bores (5, 6) defined by the casing wall (27, 28) and which intersect with one another to form gussets (24), two shafts (9, 10) arranged axially parallel in the bores (5, 6) and drivable in the same direction of rotation, screw bodies (19) mounted in non-rotary manner on part of the length of the shafts (9, 10) and provided with screw lands (18) substantially clearance-free with respect to the casing wall, and multi-flight kneading disks (21, 21', 21", 32) provided with crests (25, 25', 25", 33) associated with the casing wall (27, 28) being mounted on part of the length of the shafts (9, 10), which disks (21, 21', 21", 32) are associated by twos in a plane perpendicular to the axes of the shafts (7, 8, 7', 8') and are arranged to be moved past one another in a virtually clearance-free manner in the intersecting region of the bores (5, 6), characterized in that the casing wall (27, 25) is so dimensioned relative to the n-flight kneading disks (21, 21', 21", 32), accompanied by the formation of a definite crest clearance (s, s') between the casing wall (27, 28) and the kneading disks (21, 21', 21", 32), that

$$\frac{Dg}{a} \geqslant \frac{1}{\cos\frac{\pi}{2\,n}},$$

in which

Dg = diameter of the bores (5, 6)

a = centre-to-centre distance of the bores (5, 6)

n = number of flights on each kneading disk (21, 21', 21'', 32).

2. A twin-screw kneader as claimed in patent claim 1 with three-flight kneading disks, characterized in that

$$\frac{Dg}{a} \geqslant 1.155$$

3. A twin-screw kneader as claimed in patent claim 1 or 2, characterized in that the crest clearance (s, s') is approximately 0.06 to 0.09 times the radius (Ra) of the kneading disk (21, 21', 21'', 32).

4. A twin-screw kneader as claimed in one of patent claims 1 to 3, characterized in that the axes (7', 8') of the kneading disks (21'') are arranged with respect to the axes (7, 8) of the bores (5, 6) with an eccentricity (e), which is smaller than the crest clearance (s, s') in the case of an aligned arrangement of the axes.

## Revendications

1. Malaxeur à deux vis à même sens de rotation, tournant dans le même sens, comportant un carter (1) à deux alésages (5, 6) traversants, à axes parallèles entre-eux, formant des coins (24), délimités par la paroi de carter (27, 28), deux arbres (9, 10) disposés à axes parallèles, dans les alésages (5, 6), pouvant être entraînés dans le même sens, avec corps de vis (19) fixés sur une partie de la longueur des arbres (9, 10), et munis de crêtes de vis (18) notablement sans jeu par rapport à la paroi de carter, et des disques de malaxage (21, 21', 21'', 32) fixés à rotation sur une partie de la longueur des arbres (9, 10), à plusieurs passages et pourvus d'arêtes (25, 25', 25'', 33) adjointes à la paroi de carter (27, 28), lesdits disques de malaxage étant chaque fois mutuellement disposés par paires dans un plan perpendiculaire aux axes (7, 8, 7', 8') et qui sont déplacés l'un sur l'autre approximativement sans jeu dans le sens de passage des alésages, caractérisé en ce que, par rapport aux disques de malaxage (21, 21', 21'', 32) à n passages, la paroi de carter (27, 28) est dimensionnée en produisant un jeu des arêtes (s, s') sensible entre la paroi de carter (27, 28) et les disques de malaxage (21, 21', 21'', 32) de façon à satisfaire la relation :

$$\frac{Dg}{a} \geqslant \frac{1}{\cos\frac{\pi}{2\,n}},$$

dans laquelle

Dg = Diamètre de chaque alésage (5, 6)

a = Entraxe des alésages (5, 6)

d = Nombre des passages de chaque disque de malaxage (21, 21', 21'', 32).

2. Malaxeur à deux vis selon la revendication 1, comprenant des disques de malaxage à trois passages, caractérisée par la relation :

$$\frac{Dg}{a} \geqslant 1,155$$

3. Malaxeur à deux vis selon la revendication 1, ou 2, caractérisé en ce que le jeu des arêtes (s, s') est approximativement égal au produit par 0,06 à 0,09 du grand rayon (Ra) du disque de malaxage (21, 21', 21'', 32).

4. Malaxeur à deux vis selon l'une des revendications 1 à 3, caractérisé en ce que les axes (7', 8') des disques de malaxage (21'') sont disposés avec une excentricité (e) par rapport aux axes (7, 8) des alésages (5, 6) qui est plus faible que le jeu des arêtes (s, s') pour un agencement d'axe aligné.

FIG.1

FIG. 2

FIG.3

FIG.4

FIG.5

FIG.6

FIG. 8

FIG. 9

FIG.10

FIG.11

4